# EUROPÄISCHE PATENTSCHRIFT

(11) **EP 2 342 507 B1**
(45) Veröffentlichungstag und Bekanntmachung des Hinweises auf die Patenterteilung: **29.04.2015**
(21) Anmeldenummer: 09778404.5
(22) Anmeldetag: 08.09.2009
(51) Int. Cl.: F24J 2/04, F24J 2/54, F24J 2/24

(54) **SONNENENERGIEMODUL UND SONNENENERGIEMODULANORDNUNG**
SOLAR ENERGY MODULE AND SOLAR ENERGY MODULE ASSEMBLY
MODULE À ÉNERGIE SOLAIRE ET AGENCEMENT DE MODULE À ÉNERGIE SOLAIRE

(30) Priorität: 10.09.2008 DE 102008047327
(43) Veröffentlichungstag der Anmeldung: 13.07.2011
(73) Patentinhaber: Reutter, Odilo, 70178 Stuttgart (DE)
(72) Erfinder: Reutter, Odilo, 70178 Stuttgart (DE)
(74) Vertreter: Witte, Weller & Partner Patentanwälte mbB
(86) Internationale Anmeldenummer: PCT/EP2009/006515
(87) Internationale Veröffentlichungsnummer: WO 2010/028806

(56) Entgegenhaltungen:
- EP-A1- 1 541 797
- WO-A1-89/12205
- DE-A1- 3 620 285
- DE-A1- 10 251 921
- DE-U1- 20 209 893
- DE-U1- 29 809 100
- US-A- 3 219 104
- US-A- 4 143 640
- US-A- 4 527 548

## Beschreibung

Die vorliegende Erfindung betrifft ein Sonnenenergiemodul zur Nutzung von eingestrahlter Sonnenenergie nach dem Oberbegriff von Anspruch 1.

Ferner betrifft die vorliegende Erfindung eine Sonnenenergiemodulanordnung mit einer lichtdurchlässigen äußeren Scheibe und einer inneren Scheibe, die im Wesentlichen parallel zu der äußeren Scheibe angeordnet ist, wobei zwischen der äußeren Scheibe und der inneren Scheibe wenigstens ein Sonnenenergiemodul angeordnet ist.

Derartige Sonnenenergiemodule bzw. Sonnenenergiemodulanordnungen dienen dazu, eingestrahlte Sonnenenergie nutzbar zu machen.

Aus der DE 102 51 921 B4 ist ein Fenster-Sonnenkollektor bekannt, bei dem metallische Absorberfahnen auf von Wärmeträgerflüssigkeit durchflossene Registerrohre aufgeschoben sind, die in axialer Richtung drehbar gelagert sind und waagerecht zum Sonneneinstrahlwinkel ausgerichtet werden können, um so eine maximale Beschattung des Innenraums zu bewirken und gleichzeitig eine maximale Ausnutzung der Wärmestrahlung zu erzielen. Durch diese Fenster-Sonnenkollektoranordnung wird eine solare Brauchwassererwärmung bereitgestellt.

Nachteilig bei diesem Fenster-Sonnenkollektor ist es, dass bei maximaler Ausnutzung der Sonnenenergie der Innenraum des Gebäudes vollständig abgedunkelt ist.

Aus der DE 295 06 785 ist ein Profilelement zum Aufbau eines Lamellenfeldes bekannt, welches an wenigstens einer Oberfläche einen Aufnahmebereich für Photovoltaikelemente aufweist und an den verbleibenden Oberflächen als Reflektionselement ausgestaltet ist.

Es ist daher die Aufgabe der vorliegenden Erfindung, gegenüber den bekannten Sonnenkollektoren ein verbessertes System zur Nutzung solarer Energie bereitzustellen.

Ferner ist es die Aufgabe der vorliegenden Erfindung, verbesserte Sonnenkollektoren bereitzustellen, die an Gebäuden montiert werden können.

Diese Aufgabe wird bei dem eingangs genannten Sonnenenergiemodul dadurch gelöst, dass die Funktionsfläche und die weitere Funktionsfläche in einem stumpfen Winkel derart zueinander angeordnet sind und die weitere Funktionsfläche im Querschnitt konkav gekrümmt ausgebildet ist, dass wenn direkt einstrahlende Sonnenstrahlen orthogonal auf die photovoltaische Einheit treffen gleichzeitig direkt einstrahlende Sonnenstrahlen von der weiteren Funktionsfläche in unterschiedlichen spitzen Winkeln reflektiert werden.

Ferner wird bei der eingangs genannten Sonnenenergiemodulanordnung die oben genannte Aufgabe dadurch gelöst, dass zwischen der äußeren Scheibe und der inneren Scheibe wenigstens ein Sonnenenergiemodul angeordnet ist.

Die Erfindung hat den Vorteil, dass durch die konkave Krümmung der Funktionsfläche die Sonnenstrahlung in unterschiedlichen Reflektionswinkeln reflektiert wird und in Abhängigkeit der Krümmung der Funktionsfläche und des Abstandes zu einem Projektionspunkt eine Bündelung bzw. eine Streuung des reflektierten Lichtes erzielt werden kann. Dadurch kann die Nutzung des einstrahlenden Lichtes verbessert werden und ein Innenraum des Gebäudes beleuchtet werden.

Die Aufgabe der Erfindung wird somit vollständig gelöst.

Erfindungsgemäß ist an wenigstens einer der Funktionsflächen eine photovoltaische Einheit angeordnet.

Dadurch kann der Gesamtwirkungsgrad des Sonnenenergiemoduls erhöht werden, weil neben der Erzeugung von Wärmeenergie auch elektrische Energie durch die photovoltaische Einheit erzeugt wird. Ein besonderer Vorteil besteht darin, dass die photovoltaische Einheit an der Funktionsfläche durch die Kühlmittelleitung, die mit der Funktionsfläche in thermischem Kontakt steht, gekühlt wird und so der Wir kungsgrad der photovoltaischen Einheit erhöht ist und gleichzeitig die Wärmeenergie der Sonneneinstrahlung genutzt werden kann. Die Anwendung von photovoltaischen Zellen ist somit durch die Modulkühlung bzw. den kybernetischen Effekt in energieeffizienter und ökonomischer Weise möglich.

Erfindungsgemäß weist wenigstens eine der Funktionsflächen eine reflektierende Oberfläche auf.

Dadurch können die Sonnenstrahlen wenigstens teilweise reflektiert werden und zur Beleuchtung z.B. eines Raumes eines Gebäudes dienen.

Dabei ist es vorteilhaft, wenn die reflektierende Oberfläche selektiv reflektierend ausgebildet ist. Dadurch können bspw. die Infrarotstrahlen von dem Modulkörper absorbiert werden und dem Wärmetransportmedium als Wärmeenergie zugeführt werden und gleichzeitig Teile des sichtbaren Lichts zum Erhellen z.B. eines Innenraums eines Gebäudes reflektiert werden.

Erfindungsgemäß weist wenigstens eine der Funktionsflächen eine strahlungsabsorbierende Oberfläche aufweist.

Dadurch kann der Wirkungsgrad durch bessere Absorption der Sonnenstrahlen, insbesondere der Infrarotstrahlen, weiter verbessert werden.

Weiterhin ist es vorteilhaft, wenn wenigstens eine der Funktionsflächen zum Inneren des Modulkörpers hin ausgerichtet ist.

Dadurch können Sonnenstrahlen, die durch eine äußere Funktionsfläche hindurch strahlen von dieser inneren Funktionsfläche absorbiert oder reflektiert werden.

Weiterhin ist es vorteilhaft, wenn das Wärmetransportmedium ein phasenwechselndes Arbeitsmedium ist.

Dadurch kann die Wärmeaufnahme des Wärmetransportmediums erhöht und dadurch die Nutzung der Wärmeenergie weiter optimiert werden.

Weiterhin ist es bevorzugt, wenn der Modulkörper mittels Lagerungsmitteln um die Längsachse drehbar gelagert ist.

Dadurch kann die Funktionsfläche optimal in Bezug auf die Sonneneinstrahlung ausgerichtet werden.

Erfindungsgemäß sind zwei der Funktionsflächen in einem stumpfen Winkel zueinander angeordnet.

Dadurch kann eine der Funktionsflächen orthogonal zur Sonneneinstrahlrichtung ausgerichtet werden und gleichzeitig ein Teil der Sonnenstrahlen in einem spitzen Winkel reflektiert werden, wodurch die Aufhellung z.B. eines Innenraums eines Gebäudes möglich ist.

Erfindungsgemäß sind die Funktionsflächen derart ausgebildet, dass das einstrahlende Sonnenlicht senkrecht auf eine der Funktionsflächen auftrifft und von einer anderen Funktionsfläche in unterschiedlichen spitzen Winkeln reflektiert wird.

Dadurch kann der Wirkungsgrad einer der Funktionsflächen, vorzugsweise der photovoltaischen Einheit, erhöht und die Beleuchtung z.B. eines Innenraumes eines Gebäudes optimiert werden.

Das Sonnenenergiemodul ist vorzugsweise aus einem gut wärmeleitenden Material wie z.B. Metall, wärmeleitendem Kunststoff oder wärmeleitendem Glas gebildet.

Bei der Sonnenenergiemodulanordnung ist es bevorzugt, wenn die innere Scheibe lichtdurchlässig ausgebildet ist.

Dadurch kann Licht in dem Inneren eines Gebäudes dringen, um diesen zu erhellen.

Ferner ist es bei der Sonnenenergiemodulanordnung bevorzugt, wenn das wenigstens eine Sonnenenergiemodul um die Längsachse mittels Lagerungsmitteln drehbar gelagert sind.

Dadurch kann die Funktionsfläche optimal zur Sonneneinstrahlrichtung ausgerichtet werden und der Wirkungsgrad somit verbessert werden.

Ferner ist es bevorzugt, dass die Lagerungsmittel Drehdurchführungen aufweisen, die die Auslass- und Einlassöffnung der Modulkörper mit einem Fluidsystem verbinden.

Dadurch ist die Zuführung und Ableitung des Wärmetransportmediums sichergestellt und gleichzeitig kann das Sonnenenergiemodul optimal zur Sonneneinstrahlrichtung ausgerichtet werden.

Ferner ist es bevorzugt, dass zwischen der äußeren und der inneren Scheibe an einem Randabschnitt ein Rahmenelement angeordnet ist, das das Fluidsystem und die Lagerungsmittel aufnimmt.

Dadurch lassen sich das Fluidsystem und die Lagerungsmittel platzsparend am Rand der Scheiben montieren.

Ferner ist es bevorzugt, dass Antriebsmittel vorgesehen sind, die dazu ausgelegt sind, das wenigstens eine Sonnenenergiemodul um die Längsachse zu rotieren.

Dadurch lassen sich die Sonnenenergiemodule einfach in Bezug auf die Sonneneinstrahlrichtung ausrichten.

Weiterhin ist es bevorzugt, dass die Lagerungsmittel an den axialen Enden des wenigstens einen Sonnenenergiemoduls angeordnet sind.

Dadurch können die Lagerungsmittel in dem Rahmenelement verborgen werden und die Funktionsfläche wird nicht durch Lagerungsmittel reduziert.

Ferner ist es bevorzugt, wenn weitere Lagerungsmittel zwischen den axialen Enden des wenigstens einen Sonnenenergiemoduls angeordnet sind.

Durch eine derartige Lagerung lässt sich die mechanische Stabilität der Sonnenenergiemodule erhöhen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung und andere Beispiele sind in der Zeichnung dargestellt und werden in der nachfolgenden Beschreibung näher erläutert. Es zeigen:
- Fig. 1: eine Prinzipskizze eines Sonnenenergiemoduls in einer Schnittansicht;
- Fig. 2: eine Prinzipskizze einer bevorzugten Ausführungsform des Sonnenenergiemoduls mit photovoltaischer Einheit;
- Fig. 3: eine Prinzipskizze eines Sonnenenergiemoduls mit zwei gekrümmten Funktionsflächen;
- Fig. 4a-e: schematische Darstellungen unterschiedlicher Profilflächen mit gekrümmten Funktionsflächen;
- Fig. 5a-g: schematische Darstellungen unterschiedlicher Profilflächen mit geraden Funktionsflächen;
- Fig. 6: eine schematische Darstellung einer erfindungsgemäßen Sonnenenergiemodulanordnung;
- Fig. 7: eine schematische Schnittdarstellung eines Rahmenelementes einer Sonnenenergiemodulanordnung;
- Fig. 8: eine schematische Darstellung eines Kühlmittelsystems für eine Sonnenenergiemodulanordnung.

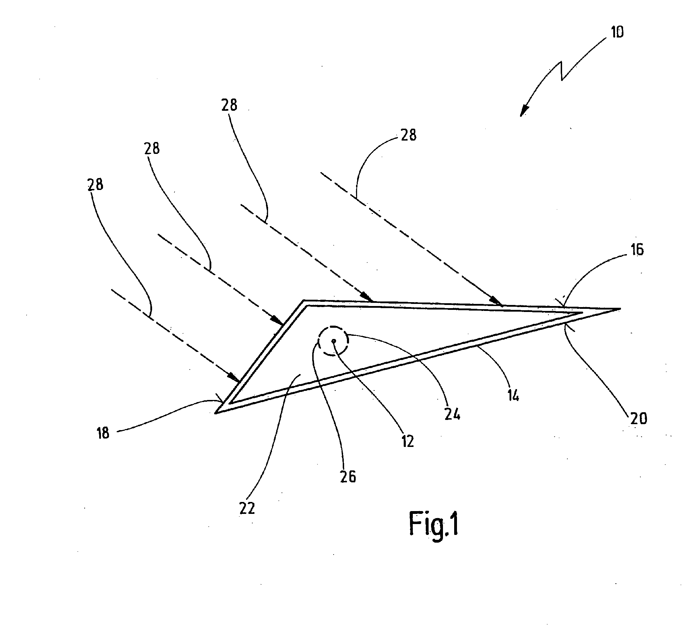

In Fig. 1 ist das Sonnenenergiemodul generell mit 10 bezeichnet.

In Fig. 1 ist eine schematische Schnittansicht des Sonnenenergiemoduls 10 in Richtung einer Längsachse 12 dargestellt. Das Sonnenenergiemodul weist einen langgestreckten Modulkörper 14 mit einer polygonalen Grundfläche auf, an dessen äußeren umfänglichen Flächen drei Funktionsflächen 16, 18, 20 gebildet sind. Im Inneren des Modulkörpers 14 ist ein Hohlraum 22 ausgebildet, dessen äußere Kontur der Außenkontur des Modulkörpers 14 entspricht. Ferner sind in Fig. 1 eine Zulauföffnung 24 und eine Ablauföffnung 26 schematisch dargestellt, die mit dem Hohlraum 22 verbunden sind. Die Zulauföffnung 24 und die Ablauföffnung 26 sind an axialen Stirnseiten des Modulkörpers koaxial zu der Längsachse 12 ausgebildet. Ferner ist in Fig. 1 einstrahlende Sonnenstrahlung 28, die auf das Sonnenenergiemodul 10 einstrahlt, schematisch dargestellt.

Der Modulkörper 14 weist eine dreieckige Grundfläche auf, so dass an den Außenflächen des Modulkörpers 14 die drei Funktionsflächen 16, 18, 20 gebildet sind. Der Modulkörper 14 weist den Hohlraum 22 auf, der als Kühlmittelleitung bzw. Fluidleitung für ein Wärmetransportmedium dient. Zum Zuführen des Wärmetransportmediums in den Hohlraum 22 ist an dem Modulkörper 14 die Zulauföffnung 24 ausgebildet. Entsprechend ist an dem Modulkörper 14 die Ablauföffnung 26 gebildet, um das Wärmetransportmedium aus dem Hohlraum 22 abzuführen. Die auf das Sonnenenergiemodul 10 einstrahlende Sonnenstrahlung 28 bestrahlt zwei der Funktionsflächen 16, 18. Durch die einstrahlende Sonnenstrahlung 28 werden die Funktionsflächen 16, 18 erwärmt. Dadurch, dass der Modulkörper 14 den Hohlraum 22 aufweist, indem das Wärmetransportmedium geführt ist, kann Wärmeenergie, die durch die Sonneneinstrahlung erzeugt wird, von den Funktionsflächen 16, 18 auf das Wärmetransportmedium übertragen werden. Das so erwärmte Wärmetransportmedium wird durch die Ablauföffnung 26 abgeführt und kann so einer Energienutzung, wie z.B. einer Brauchwassererwärmung, zugeführt werden.

Der in Fig. 1 dargestellte Hohlraum 22 weist eine Außenkontur auf, die der Außenkontur des Modulkörpers 14 entspricht. Durch diese dünnwandige Ausgestaltung des Modulkörpers 14 ist eine optimale thermische Anbindung der Funktionsflächen 16, 18, 20 an das Wärmetransportmedium möglich. Vorzugsweise ist der Modulkörper 14, wie in Fig. 1 dargestellt, als dünnwandiger Hohlkörper ausgebildet. Alternativ kann der Modulkörper 14 auch als Vollkörper ausgeführt sein, indem Kühlmittelleitungen zur Aufnahme des Wärmetransportmediums ausgebildet sind.

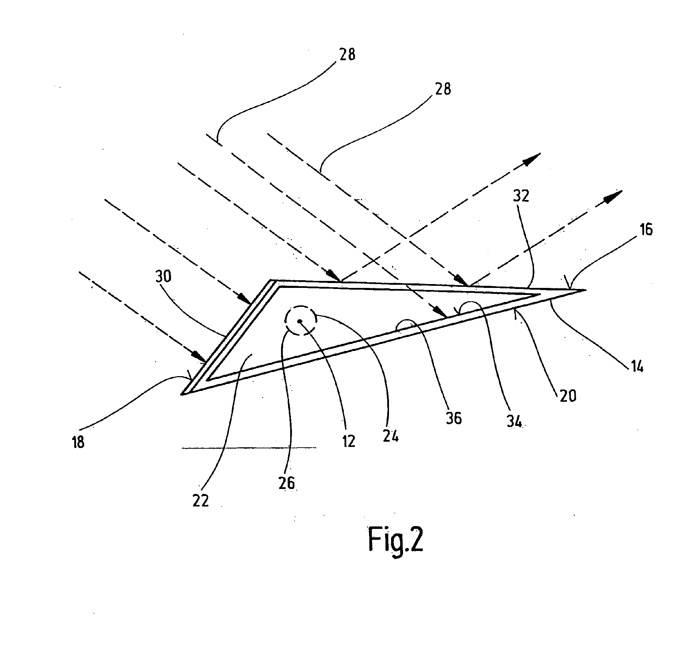

In Fig. 2 ist ein Beispiel mit unterschiedlichen Funktionsflächen dargestellt. Dabei ist an der Funktionsfläche 18 eine photovoltaische Einheit 30 angeordnet. Ferner weist die Funktionsfläche 16 eine reflektierende Schicht 32 auf, die die einstrahlenden Sonnenstrahlen 28 wenigstens teilweise reflektiert. Es ist bevorzugt, dass die reflektierende Schicht 32 teilweise reflektierend bzw. teilweise durchlässig ausgebildet ist. Dabei ist die reflektierende Schicht 32 vorzugsweise so ausgebildet, dass langwelliges Licht und insbesondere Infrarotstrahlung durchgelassen und kurzwelliges Licht reflektiert wird. Dies ist in Fig. 2 dadurch angedeutet, dass einer der dargestellten Sonnenstrahlen 28 durch die Funktionsfläche 16 hindurchstrahlt und zwei weitere der Sonnenstrahlen 28 von der Funktionsfläche 16 reflektiert werden. Ferner ist an einer Innenseite des Modulkörpers 14 eine weitere Funktionsfläche 34 ausgebildet. Diese Funktionsfläche 34 ist vorzugsweise mit einer strahlungsabsorbierenden Schicht 36 beschichtet, um die durchstrahlenden Sonnenstrahlen 28 zu absorbieren und somit den Wirkungsgrad weiter zu erhöhen. Weiterhin ist das Sonnenenergiemodul 14 vorzugsweise um die Längsachse 12 drehbar gelagert, um die Funktionsflächen 16, 18, 20, 34 optimal in Bezug auf die Sonnenstrahlung 28 auszurichten.

In Fig. 2 ist die an der Funktionsfläche 18 angeordnete photovoltaische Einheit 30 orthogonal zu der einstrahlenden Sonnenstrahlung 28 ausgerichtet, um eine besonders hohe Ausbeute der Sonnenenergie zu erzielen. Die photovoltaische Einheit ist mit dem Modulkörper 14 in thermisch gutem Kontakt, damit die photovoltaische Einheit 30 durch das Wärmetransportmedium, das in den Hohlraum 22 zum Wärmetransport eingeleitet ist, gekühlt wird. Durch diese Kühlung kann zum einen der Wirkungsgrad der photovoltaischen Einheit 30 gesteigert werden und zum anderen kann weitere Wärmeenergie vom Modulkörper 14 aufgenommen und durch das Wärmetransportmedium abtransportiert und genutzt werden. Die photovoltaische Einheit 30 ist vorzugsweise so ausgebildet, dass bestimmte Wellenlängen der einstrahlenden Sonnenstrahlung 28 in elektrische Energie umgewandelt werden und vorzugsweise die langwellige Infrarotstrahlung durch die photovoltaische Einheit 30 hindurchstrahlt und dadurch das Wärmetransportmedium erwärmt.

Dadurch, dass die Funktionsfläche 16 mit der teilweise reflektierenden Schicht 32 beschichtet ist, wird die einstrahlende Sonnenstrahlung 28 teilweise reflektiert, um so bspw. Licht in einen Innenraum eines Gebäudes zu reflektieren und diesen zu erhellen. Dadurch, dass die teilweise reflektierende Schicht 32 einige Wellenlängen der einstrahlenden Sonnenstrahlung 28 nicht reflektiert, sondern hindurch lässt, kann das Wärmetransportmedium erwärmt werden und dadurch der Wirkungsgrad des Sonnenenergiemoduls 10 gesteigert werden. Die durchstrahlende Sonnenstrahlung 28 wird von dem Wärmetransportmedium und/oder von der Funktionsfläche 34, die an einer Innenseite des Modulkörpers 14 gebildet ist, absorbiert. Dazu ist die Funktionsfläche 34 mit der strahlungsabsorbierenden Schicht 36 beschichtet. Dadurch, dass der Modulkörper 14 um die Längsachse 12 drehbar gelagert ist, können die Funktionsflächen 16, 18, 20, 34 beliebig und demnach optimal relativ zu der einstrahlenden Sonnenstrahlung 28 ausgerichtet werden. Dabei ist es bevorzugt, wenn die Sonnenstrahlung 28 orthogonal auf die photovoltaische Einheit 30 auftrifft und in einem spitzen Winkel auf die reflektierende Schicht 32 der Funktionsfläche 16 auftrifft, um die Sonnenstrahlung 28 optimal in einen Innenraum eines Gebäudes zu lenken.

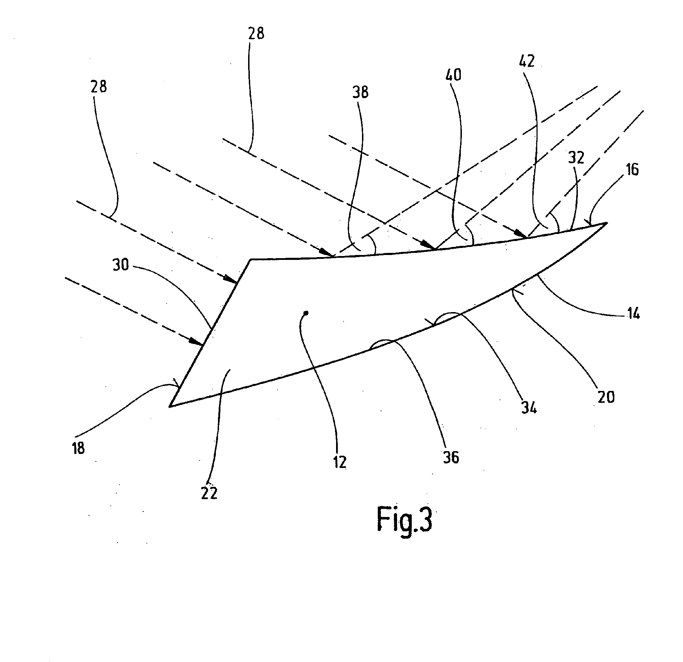

Fig. 3 zeigt eine erfindungsgemäße Ausführungsform des Sonnenenergiemoduls 10 aus Fig. 2. Gleiche Elemente sind mit gleichen Bezugsziffern bezeichnet, wobei hier nur die Unterschiede dargestellt sind.

Der Modulkörper 14 aus Fig. 3 weist gegenüber Fig. 2 eine geänderte Außenkontur auf. Die Funktionsfläche 16 ist konkav gekrümmt ausgebildet. Ferner ist die Funktionsfläche 20 konvex gekrümmt ausgebildet.

Dadurch, dass die Funktionsfläche 16, die mit der teilweise reflektierenden Schicht 32 beschichtet ist, konkav gekrümmt ausgebildet ist, wird die Sonnenstrahlung 28 in unterschiedlichen Reflektionswinkeln 38, 40, 42 reflektiert. Dadurch kann in Abhängigkeit der Krümmung Funktionsfläche 16 und des Abstandes zu einem Projektionspunkt eine Bündelung bzw. Streuung des reflektierten Lichts erzielt werden. Die Funktionsfläche 20 ist konvex gekrümmt, wodurch gleichzeitig die Funktionsfläche 34 konkav gekrümmt ist. Die Funktionsfläche 20 kann ebenfalls mit einer reflektierenden oder absorbierenden Schicht beschichtet sein, um in einer anderen Rotationsposition des Modulkörpers 14, um die Längsachse 12, die Sonnenstrahlung 28 zu absorbieren oder zu reflektieren.

Die gekrümmte Funktionsfläche 16 und die gekrümmte Funktionsfläche 20 kann in Form eines Kreisbogens ausgebildet sein. Dadurch können die reflektierten Sonnenstrahlen in einem Brennpunkt fokussiert werden. Ferner ist es auch denkbar, dass die gekrümmte Funktionsfläche 16 und die gekrümmte Funktionsfläche 20 entsprechend einer Exponentialfunktion gekrümmt sind. In diesem Fall werden die reflektierten Sonnenstrahlen nicht in einem Brennpunkt fokussiert.

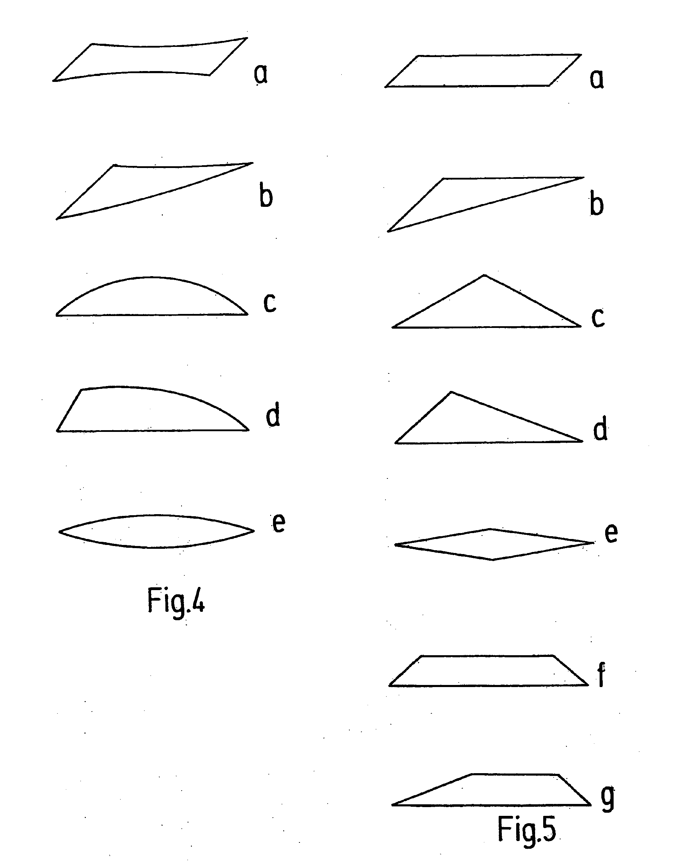

In Fig. 4a bis e sind unterschiedliche Profilflächen des Modulkörpers 14 dargestellt. Die dargestellten Formen weisen eine Kombination von ebenen, konkav gekrümmten und/oder konvex gekrümmten Funktionsflächen auf.

In den Figuren 5a bis g sind weitere Profilflächen des Modulkörpers 14 schematisch dargestellt. Die dargestellten Formen weisen ausschließlich ebene Funktionsflächen auf. Es versteht sich, dass es auch denkbar ist diese Formen mit einzelnen gekrümmten Flächen auszubilden.

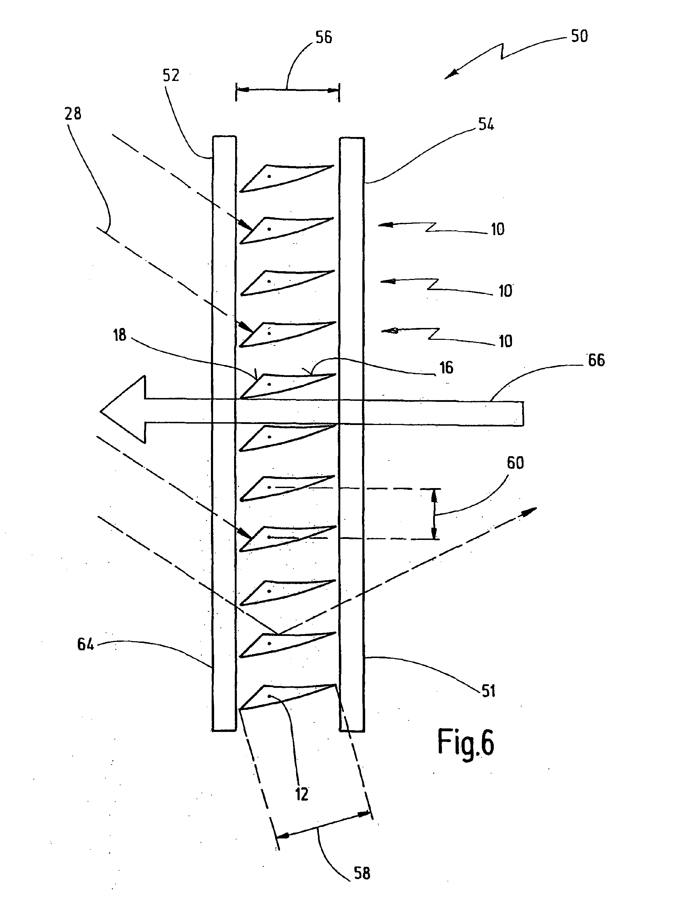

In Fig. 6 ist eine Anordnung von mehreren Sonnenenergiemodulen 10 dargestellt. Die in Fig. 6 dargestellte Sonnenenergiemodulanordnung ist allgemein mit 50 bezeichnet.

Die Sonnenenergiemodulanordnung 50 dient vorzugsweise dazu, als Fenster oder Fassadenelement an Gebäuden montiert zu werden und so die eingestrahlte Sonnenenergie zu nutzen, und zwar mittels der photovoltaischen Einheit 30 zur Erzeugung elektrischer Energie und mittels des Wärmetransportmediums bspw. zur Brauchwassererwärmung. Sofern die Sonnenenergiemodulanordnung 50 als Fensterelement verwendet wird, schließt sich an eine Innenseite 51 der Sonnenenergiemodulanordnung 50 ein Innenraum des Gebäudes an.

Die Sonnenenergiemodulanordnung 50 weist eine Außenscheibe 52 und eine Innenscheibe 54 auf. Die Außenscheibe 52 und die Innenscheibe 54 sind parallel zueinander angeordnet und weisen einen Abstand 56 auf. Die Außenscheibe 52 ist aus einem lichtdurchlässigen Material gebildet. Die Innenscheibe 54 kann wahlweise aus einem lichtdurchlässigen bzw. durchsichtigen Material oder einen lichtundurchlässigen Material gebildet sein. Ferner ist es denkbar, dass die Innenscheibe 54 durch ein teilweise lichtdurchlässiges Material gebildet ist. Zwischen der Außenscheibe 52 und der Innenscheibe 54 sind eine Mehrzahl von Sonnenenergiemodulen 10 angeordnet. In Fig. 6 sind die Sonnenenergiemodule 10 und einzelne mehrfach dargestellte Elemente lediglich beispielhaft bezeichnet. Die Sonnenenergiemodule 10 sind jeweils um die Längsachse 12 drehbar gelagert. Die Sonnenenergiemodule 10 weisen eine maximale Breite 58 auf. Der Abstand 56 ist vorzugsweise größer oder gleich der Breite 58. Die Sonnenenergiemodule 10 sind in einem Modulabstand 60 zueinander montiert. Die Sonnenenergiemodule 10 sind in Fig. 6 relativ zu der Sonnenstrahlung 28 so ausgerichtet wie in der Darstellung von Fig. 3, so dass die Sonnenstrahlung 28 auf die Funktionsfläche 18 orthogonal einstrahlt und auf die gekrümmte Funktionsfläche 16 in unterschiedlichen spitzen Winkeln. Der Modulabstand 60 ist so groß gewählt, dass in dieser Rotationsposition zwischen den Sonnenenergiemodulen 10 diffuses Licht hindurch dringen kann, so dass eine Durchsicht durch die Sonnenenergiemodulanordnung 50 von der Innenseite 51 der Sonnenenergiemodulanordnung 50 zu einer Außenseite 64 möglich ist, wie es durch den Pfeil 66 angedeutet ist.

Wie in Fig. 6 dargestellt, fällt die Sonnenstrahlung 28 teilweise auf die Funktionsfläche 18 der Sonnenenergiemodule 10. Teilweise fällt die Sonnenstrahlung 28 auf die Funktionsfläche 16 der Sonnenenergiemodule 10 und wird wenigstens teilweise in den Innenraum reflektiert, um diesen zu beleuchten. Je größer der Modulabstand 60 gewählt ist, desto mehr Sonnenstrahlung 28 fällt auf die Funktionsfläche 16 und demnach wird mehr Sonnenstrahlung 28 in den Innenraum reflektiert. Ferner nimmt die Möglichkeit der Durchsicht durch die Sonnenenergiemodulanordnung von der Innenseite 51 zu der Außenseite 64 zu. Sofern der Modulabstand 60 kleiner oder gleich der Breite 58 ist, kann in einer besonderen Rotationsstellung der Sonnenenergiemodule 10 die gesamte Sonnenstrahlung 28 auf die Funktionsfläche 16, 18 fallen und dadurch der Innenraum vollständig verdunkelt werden.

Im Allgemeinen dient die reflektierende Oberfläche 32 zur Lichtlenkung bzw. Lichtbündelung. Dadurch können die Sonnenstrahlen 28 in den Innenraum des Gebäudes reflektiert oder aber auf eine der Funktionsflächen 18, 20, 34, insbesondere auf eine absorbierende Funktionsfläche 18, 20, 34 bzw. die photovoltaische Einheit 30, gelenkt werden. Ferner ist es auch denkbar, dass die reflektierende Oberfläche 32 der Funktionsfläche 16 derart ausgebildet ist, dass die Sonnenstrahlung 28 auf die Funktionsfläche 16, 18, 20, 34 eines benachbarten Sonnenenergiemoduls 10 der Sonnenenergiemodulanordnung 50 reflektiert wird.

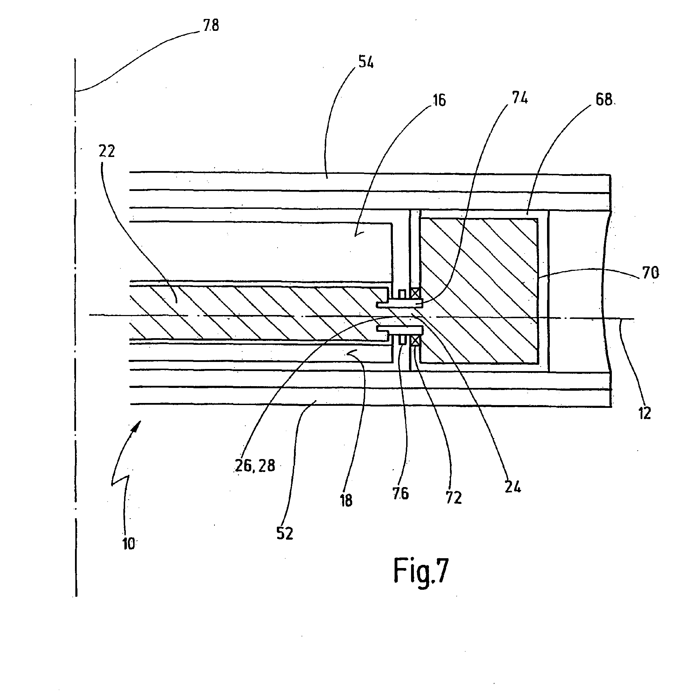

Fig. 7 zeigt eine Schnittdarstellung durch die Sonnenenergiemodulanordnung 50, um die Lagerung der Sonnenenergiemodule 10 und die Versorgung mit Wärmetransportmedium zu erläutern. Zwischen der Innenscheibe 54 und der Außenscheibe 52 ist ein Rahmenelement 68 angeordnet, das an der Außenscheibe 52 und der Innenscheibe 54 anliegt. Das Rahmenelement weist eine Steigleitung 70 auf, in dem das Wärmetransportmedium geführt wird. In dem Rahmenelement 68 ist ein Lager 72 angeordnet, das eine Drehdurchführung 74 des Sonnenenergiemoduls 10 drehbar lagert. Die Drehdurchführung 74 ist mit dem Modulkörper 14 drehfest verbunden und bildet die Zulauföffnung 24 bzw. die Ablauföffnung 26 des Hohlraums 22. Die Steigleitung 70 ist durch die Drehdurchführung 74 mit dem Hohlraum 22 verbunden. Die Drehdurchführung 74 ist umfänglich mit einem Antriebszahnrad 76 drehfest verbunden. Die in Fig. 7 dargestellte Sonnenenergiemodulanordnung 50 ist prinzipiell symmetrisch zu einer Symmetrieachse 78 ausgebildet. Demgemäß ist an einem gegenüberliegenden axialen Ende des dargestellten Sonnenenergiemoduls 10 ebenfalls ein Rahmenelement 68 mit einem Lager 72 angeordnet. Es versteht sich, dass die Drehdurchführung 74 ebenfalls eine elektrische Drehdurchführung aufweisen kann, um die in der photovoltaischen Einheit 30 erzeugte elektrische Energie abzuführen. Die elektrische Drehdurchführung ist in Fig. 7 nicht gesondert dargestellt.

Das Rahmenelement 68 dient als Abstandshalter und gleichzeitig als Verbindungselement, um die Außenscheibe 52 mit der Innenscheibe 54 fest zu verbinden. Ferner ist das Rahmenelement 68 hohl ausgebildet und bildet die Steigleitung 70, die den Hohlraum 22 durch die Drehdurchführung 74 mit Wärmetransportmedium versorgt. Das Rahmenelement 68 kann von der Innenscheibe 54 und der Außenscheibe 52 thermisch isoliert sein, um Wärmeübertragung auf das Glas zu verringern. Zu diesem Zweck kann das Rahmenelement 68 aus einem Material mit geringer Wärmeleitfähigkeit gebildet sein. Alternativ kann das Rahmenelement 68 durch eine zusätzliche Isolierschicht zwischen Rahmenelement 68 und Innenscheibe 54 bzw. Außenscheibe 52 isoliert werden.

Ferner dient die Drehdurchführung 74 in Kombination mit dem Lager 72 dazu, das Sonnenenergiemodul 10 um die Längsachse 12 drehbar zu lagern. Das Antriebszahnrad 76 dient dazu, ein Drehmoment auf die Drehdurchführung 74 zu übertragen und so das Sonnenenergiemodul 10 in eine gewünschte Rotationsposition um die Längsachse 12 zu drehen. Dazu ist das Antriebszahnrad 76 über nicht dargestellte Antriebsmittel, wie z.B. Ketten, Zahnriemen oder Zahnräder mit einer nicht dargestellten Antriebseinheit verbunden, die das Drehmoment auf das Antriebszahnrad 76 überträgt. Es ist bevorzugt, dass alle Sonnenenergiemodule 10, die in einer Sonnenenergiemodulanordnung 50 angeordnet sind, wie es bspw. in Fig. 6 dargestellt ist, über eine Antriebseinheit und Antriebsmittel miteinander verbunden sind und so synchron rotiert werden können.

In Fig. 7 ist das Antriebszahnrad 76 an einem axialen Ende des Sonnenenergiemoduls 10 angeordnet, allerdings es ist auch denkbar, um Verwindungen des Modulkörpers 14 zu vermeiden, dass auch an dem nicht dargestellten gegenüberliegenden axialen Ende ein weiteres Antriebszahnrad 76 angeordnet ist. Ferner ist es auch denkbar, dass die Sonnenenergiemodule nicht nur an ihren axialen Enden, wie in Fig. 7 dargestellt, gelagert sind, sondern dass auch an einem mittleren Abschnitt ein Lager aufweist, um eine bessere Stabilität zu erzielen und Durchbiegungen zu vermeiden.

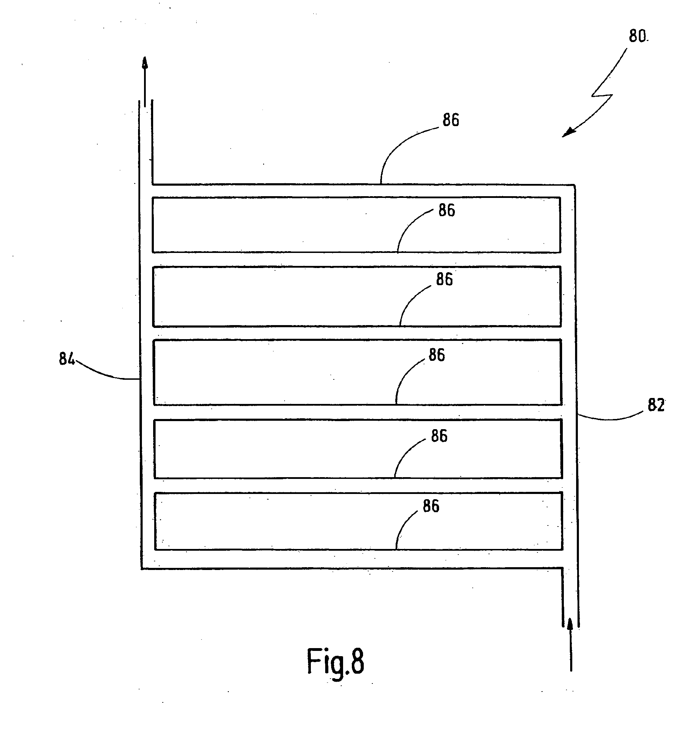

In Fig. 8 ist ein Fluidsystem zur Versorgung der Sonnenenergiemodulanordnung 50 mit Wärmetransportmedium schematisch dargestellt und allgemein mit 80 bezeichnet. Das Fluidsystem 80 weist eine Zulaufsteigleitung 82 und eine Ablaufsteigleitung 84 auf. Die Zulaufsteigleitung 82 und die Ablaufsteigleitung 84 entsprechen im Wesentlichen der in Fig. 7 dargestellten Steigleitung 70. Zwischen der Zulaufsteigleitung 82 und der Ablaufsteigleitung 84 sind horizontale Leitungen 86 angeordnet.

Die horizontalen Leitungen 86 entsprechen im Wesentlichen dem Hohlraum 22 der Sonnenenergiemodule 10. Über die horizontalen Leitungen 86 ist die Zulaufsteigleitung 82 mit der Ablaufsteigleitung 84 verbunden. Über die Zulaufsteigleitung wird das Wärmetransportmedium den horizontalen Leitungen 86 zugeführt. In den horizontalen Leitungen 86 wird das Wärmetransportmedium erwärmt und über die Ablaufsteigleitung 84 abgeführt. Die Ablaufsteigleitung 84 kann mit bspw. einer Wärmepumpe oder einem Wärmetauscher verbunden sein, um die Wärmeenergie zu nutzen und z.B. Brauchwasser zu erwärmen. Danach wird das so abgekühlte Wärmetransportmedium wieder der Zulaufsteigleitung 82 zugeführt.

In der Darstellung in Fig. 8 verbinden alle horizontalen Leitungen 86 die Zulaufsteigleitung 82 mit der Ablaufsteigleitung 84. Es ist allerdings auch denkbar, dass die Zulaufsteigleitung 82 und die Ablaufsteigleitung 84 abwechselnd unterbrochen ist und so die horizontalen Leitungen 86 als Meander ausgebildet sind. Bei einer derartigen Ausführungsform sind die horizontalen Leitungen 86 nicht, wie in Fig. 8 dargestellt, parallel zueinander angeordnet, sondern in einer Reihenschaltung. Der Vorteil einer derartigen Meanderanordnung bzw. Reihenschaltung ist es, dass das Wärmetransportmedium stärker erwärmt wird, wobei allerdings die Kühlung der Photovoltaikmodule 30 geringer ist und somit auch der Wirkungsgrad der Photovoltaikmodule 30 sinkt. Prinzipiell ist die Flussrichtung des Wärmetransportmediums, wie in Fig. 8 dargestellt, von unten nach oben, also entgegen der Gravitationskraft. Es versteht sich, dass auch eine entgegengesetzte Flussrichtung des Wärmetransportmediums denkbar ist.

## Patentansprüche

1. Sonnenenergiemodul (10) zur Nutzung von eingestrahlter Sonnenenergie, mit einem langgestreckten Modulkörper (14), an dessen Außenfläche wenigstens eine Funktionsfläche (18) gebildet ist zum Absorbieren von Sonnenstrahlen (28), wobei an der Funktionsfläche (18) eine photovoltaische Einheit (30) angeordnet ist, wobei der Modulkörper (14) im Querschnitt (12) ein mehreckiges oder auch ein abgerundetes, jedoch von einer Kreisform abweichendes Außenprofil aufweist, wobei an der Außenfläche des Modulkörpers (14) wenigstens eine weitere Funktionsfläche (16, 20) zum Reflektieren und/oder teilweise Transmittieren von Sonnenstrahlen (28) gebildet ist, und wobei in dem Modulkörper (14) wenigstens eine Fluidleitung (22) ausgebildet ist, die in thermischem Kontakt mit wenigstens einer der Funktionsflächen (16, 18) steht und zur Aufnahme eines Wärmetransportmediums dient, wobei der Modulkörper (14) wenigstens eine Zulauföffnung (24) aufweist, um das Wärmetransportmedium der Fluidleitung (22) zuzuführen, und wenigstens eine Ablauföffnung (26) aufweist, um das Wärmetransportmedium aus der Fluidleitung (22) abzuführen,
**dadurch gekennzeichnet, dass**
die Funktionsfläche (18) und die weitere Funktionsfläche (16) in einem stumpfen Winkel derart zueinander angeordnet sind und die weitere Funktionsfläche (16) im Querschnitt konkav gekrümmt ausgebildet ist, dass wenn direkt einstrahlende Sonnenstrahlen (28) orthogonal auf die photovoltaische Einheit (30) treffen gleichzeitig direkt einstrahlende Sonnenstrahlen von der weiteren Funktionsfläche (16) in unterschiedlichen spitzen Winkeln (38, 40, 42) reflektiert werden.

2. Sonnenenergiemodul nach Anspruch 1, **dadurch gekennzeichnet, dass** wenigstens eine der Funktionsflächen (16, 18, 20, 34) zum Inneren des Modulkörpers (14) hin ausgerichtet ist.

3. Sonnenenergiemodul nach Anspruch 1 oder 2, **dadurch gekennzeichnet, dass** der Modulkörper (14) mittels Lagerungsmitteln (72) um die Längsachse (12) drehbar gelagert ist.

4. Sonnenenergiemodulanordnung mit einer lichtdurchlässigen äußeren Scheibe (52) und einer inneren Scheibe (54), die im Wesentlichen parallel zu der äußeren Scheibe (52) angeordnet ist, wobei zwischen der äußeren Scheibe (52) und der inneren Scheibe (54) wenigstens ein Sonnenenergiemodul (10) nach einem der Ansprüche 1 bis 3 angeordnet ist.

5. Sonnenenergiemodulanordnung nach Anspruch 4, **dadurch gekennzeichnet, dass** die innere Scheibe (54) lichtdurchlässig ausgebildet ist.

6. Sonnenenergiemodulanordnung nach Anspruch 4 oder 5, **dadurch gekennzeichnet, dass** das wenigstens eine Sonnenenergiemodul (10) um die Längsachse (12) mittels Lagerungsmitteln (72) drehbar gelagert ist.

7. Sonnenenergiemodulanordnung nach Anspruch 6, **dadurch gekennzeichnet, dass** die Lagerungsmittel (72) Drehdurchführungen (74) aufweisen, die die Ablauf- (26) und die Zulauföffnung (24) der Modulkörper (14) mit einem Fluidsystem (80) verbinden.

8. Sonnenenergiemodulanordnung nach Anspruch 6 oder 7, **dadurch gekennzeichnet, dass** Antriebsmittel vorgesehen sind, die dazu ausgelegt sind, das wenigstens eine Sonnenenergiemodul (10) um die Längsachse (12) zu rotieren.

9. Sonnenenergiemodulanordnung nach einem der Ansprüche 6 bis 8, **dadurch gekennzeichnet, dass** die Lagerungsmittel (72) an axialen Enden des wenigstens einen Sonnenenergiemoduls (10) angeordnet sind und dass weitere Lagerungsmittel (72) zwischen den axialen Enden angeordnet sind.

## Claims

1. A solar energy module (10) for a building for using incident solar energy, having an elongated module body (14), wherein on an outer surface thereof at least one functional area (18) is formed for absorption of solar rays (28), wherein a photovoltaic unit (30) is arranged on the functional area (16, 18, 20, 34), wherein the module body (14) has a cross section (12) with a polygonal or a rounded external profile, but different from a circular form, and wherein at the outer surface at least one further functional area (16, 20, 34) is formed on the module body (14) for reflection and/or partial transmission of solar rays (28), wherein at least one fluid line (22) is formed in the module body (14), which fluid line (22) is in thermal contact with the functional area (16, 18, 20, 34) and is used to accommodate a heat transport medium, wherein the module body (14) has at least one inlet opening (24) in order to supply the heat transport medium to the fluid line (22), and has at least one outlet opening (26) in order to carry the heat transport medium out of the fluid line (22),
**characterized in that**
the functional area (18) and the further functional area (16) are arranged at an obtuse angle to one another and the further functional area (16) has a cross section with concave curvature such that if the directly incident solar rays (28) strike the photovoltaic unit (30) orthogonally directly incident solar rays are at the same time reflected at different acute angles (38, 40, 42).

2. The solar energy module as claimed in claim 1, **characterized in that** at least one of the functional areas (16, 18, 20, 34) faces the interior of the module body (14).

3. The solar energy module as claimed in claim 1 or 2, **characterized in that** the module body (14) is supported by means of bearing means (72) such that it can rotate about the longitudinal axis (12).

4. A solar energy module arrangement having a light-transmissive outer pane (52) and an inner pane (54), which is arranged substantially parallel to the outer pane (52), wherein at least one solar energy module (10) as claimed in one of claims 1 to 3 is arranged between the outer pane (52) and the inner pane (54).

5. The solar energy module arrangement as claimed in claim 4, **characterized in that** the inner pane (54) is light-transmissive.

6. The solar energy module arrangement as claimed in claim 4 or 5, **characterized in that** the at least one solar energy module (10) is supported by means of bearing means (72) such that it can rotate about the longitudinal axis (12).

7. The solar energy module arrangement as claimed in claim 6, **characterized in that** the bearing means (72) have rotating bushings (74), which connect the outlet opening (26) and the inlet opening (24) of the module bodies (14) to a fluid system (80).

8. The solar energy module arrangement as claimed in claim 6 or 7, **characterized in that** drive means are provided, which are designed to rotate the at least one solar energy module (10) about the longitudinal axis (12).

9. The solar energy module arrangement as claimed in one of claims 6 to 8, **characterized in that** the bearing means (72) are arranged at axial ends of the at least one solar energy module (10) and that further bearing means (72) are arranged between the axial ends.

## Revendications

1. Module à énergie solaire (10) destiné à l'utilisation d'énergie solaire captée, avec un corps de module allongé (14), sur la face extérieure duquel est formée au moins une face fonctionnelle (18) destinée à absorber des rayons de soleil (28), dans lequel une unité photovoltaïque (30) est disposée sur la face fonctionnelle (18), dans lequel le corps de module (14) présente en section transversale (12) un profil extérieur polygonal ou aussi un profil extérieur arrondi mais s'écartant d'une forme circulaire, dans lequel au moins une autre face fonctionnelle (16, 20) est formée sur la face extérieure du corps de module (14) pour réfléchir et/ou transmettre partiellement des rayons de soleil (28), et dans lequel au moins une conduite de fluide (22) est formée dans le corps de module (14), et se trouve en contact thermique avec au moins une des faces fonctionnelles (16, 18) et sert à contenir un milieu caloporteur, dans lequel le corps de module (14) présente au moins une ouverture d'admission (24) pour amener le milieu caloporteur à la conduite de fluide (22) et au moins une ouverture d'évacuation (26) pour évacuer le milieu caloporteur hors de la conduite de fluide (22),
**caractérisé en ce que**
la face fonctionnelle (18) et l'autre face fonctionnelle (16) sont disposées sous un angle obtus l'une par rapport à l'autre et l'autre face fonctionnelle (16) est de forme concave en section transversale, de telle manière que, lorsque des rayons de soleil directement incidents (28) arrivent orthogonalement sur l'unité photovoltaïque (30), simultanément des rayons de soleil directement incidents soient réfléchis sous différents angles aigus (38, 40, 42) par l'autre face fonctionnelle (16).

2. Module à énergie solaire selon la revendication 1, **caractérisé en ce qu'**au moins une des faces fonctionnelles (16, 18, 20, 34) est orientée en direction de l'intérieur du corps de module (14).

3. Module à énergie solaire selon la revendication 1 ou 2, **caractérisé en ce que** le corps de module (14) est supporté de façon rotative autour de l'axe longitudinal (12) au moyen de moyens de palier (72).

4. Agencement de module à énergie solaire avec une vitre extérieure transparente (52) et une vitre intérieure (54), qui est disposée de façon essentiellement parallèle à la vitre extérieure (52), dans lequel au moins un module à énergie solaire (10) selon l'une quelconque des revendications 1 à 3 est disposé entre la vitre extérieure (52) et la vitre intérieure (54).

5. Agencement de module à énergie solaire selon la revendication 4, **caractérisé en ce que** la vitre intérieure (54) est transparente.

6. Agencement de module à énergie solaire selon la revendication 4 ou 5, **caractérisé en ce que** ledit au moins un module à énergie solaire (10) est supporté de façon rotative autour de l'axe longitudinal (12) au moyen de moyens de palier (72).

7. Agencement de module à énergie solaire selon la revendication 6, **caractérisé en ce que** les moyens de palier (72) présentent des passages tournants (74), qui relient l'ouverture d'évacuation (26) et l'ouverture d'admission (24) des corps de module (14) à un système de fluide (80).

8. Agencement de module à énergie solaire selon la revendication 6 ou 7, **caractérisé en ce qu'**il est prévu des moyens d'entraînement, qui sont conçus de façon à faire tourner ledit au moins un module à énergie solaire (10) autour de l'axe longitudinal (12).

9. Agencement de module à énergie solaire selon l'une quelconque des revendications 6 à 8, **caractérisé en ce que** les moyens de palier (72) sont disposés à des extrémités axiales dudit au moins un module à énergie solaire (10) et **en ce que** d'autres moyens de palier (72) sont disposés entre les extrémités axiales.
